Europäisches Patentamt

European Patent Office

Office européen des brevets

(11) Publication number: **0 466 302 A1**

# EUROPEAN PATENT APPLICATION

(21) Application number: **91303694.3**

(22) Date of filing: **24.04.91**

(51) Int. Cl.5: **H01M 2/16**, H01M 10/52

(30) Priority: **09.07.90 US 550276**

(43) Date of publication of application:
**15.01.92 Bulletin 92/03**

(84) Designated Contracting States:
**AT BE CH DE DK ES FR GB GR IT LI LU NL SE**

(71) Applicant: **W.R. Grace & Co.-Conn.**
**1114 Avenue of the Americas**
**New York New York 10036(US)**

(72) Inventor: **Isaacson, Mark Joseph**
**8104 Sea Light Lane**
**Columbia, Maryland 21045(US)**
Inventor: **Giovannoni, Richard Thomas**
**8939 Tamar Drive**
**Columbia, Maryland 21045(US)**
Inventor: **Choi, Wai Ming**
**3 Jaffrey Circle**
**Waban, Massachusetts 02163(US)**
Inventor: **Kung, James Kong-Jaw**
**40 Lawrence Lane**
**Lexington, Massachusetts 02173(US)**

(74) Representative: **Barlow, Roy James et al**
**J.A. KEMP & CO. 14, South Square, Gray's Inn**
**London WC1R 5LX(GB)**

(54) **Battery separator for recombinant batteries.**

(57) A sheet product useful as a separator/electrolyte reservoir component for recombinant batteries, and the improved battery resulting therefrom. The sheet product is formed from certain small diameter fibers, certain large diameter fibers, an ultrafine inert particulate and a binding agent.

EP 0 466 302 A1

The present invention is directed to a sheet product which is useful as a separator/electrolyte reservoir component for sealed, recombinant batteries. More specifically, the instant invention is directed to a microporous sheet product formed from certain small diameter polymeric fibers, certain large diameter inorganic fibers, an ultrafine inert particulate and a binding agent, as full described herein below.

BACKGROUND OF THE INVENTION

Membranes have been formed from various materials and used for various applications such as ion exchange, osmotic and ultrafiltration devices and the like. Macro-and microporous membranes have been used as a means of insulating and separating electrodes of opposite polarity contained in battery devices. Each application provides an environment and demands for a set of parameters which are distinct for the specific application.

Electrochemical cells have at least one pair of electrodes of opposite polarity and, in general, have a series of adjacent electrodes of alternating polarity. The current flow between the electrodes is maintained by an electrolyte which may be acidic, alkaline or substantially neutral depending on the nature of the battery system. Separators are located in batteries between adjacent electrodes of opposite polarity to prevent direct contact between the oppositely charged electrode plates while freely permitting electrolytic conduction.

It is generally agreed that one of the critical elements in a battery design is the separator component and, to be highly effective in the design, the separator should have a combination of features. The battery separator must be resistant to degradation and instability with respect to the battery environment, including the other battery components and the battery chemistry. Thus, the battery separator must be capable of withstanding degradation of strong acids (such as sulfuric acid commonly used in acid battery designs) or strong alkali (such as potassium hydroxide used in an alkaline battery designs) and to do so under ambient and elevated temperature conditions. Further, the separator should also be thin to provide a battery of high energy density. Although battery separators of thick or heavy design have been utilized in the past, such materials detract from the overall energy density of the battery by reducing the amount of electrodes that can be contained in a predetermined battery configuration and size. Another criteria is that the battery separator must be capable of allowing a high degree of electrolytic conductivity. Stated another way an effective separator membrane must exhibit a low electrical resistance when in the battery. The lower the electrical resistance the better the overall battery performance will be. A still further criteria is that the separator should be capable of inhibiting formation and growth of dendrites. Such dendrite formation occurs during battery operation when part of the electrode material becomes dissolved in the electrolyte and, while passing through the separator, deposits therein to develop a formation which can, after a period of time, bridge the thickness of the separator membrane and cause shorting between electrodes of opposite polarity.

In addition to meeting the above combination of properties, it is highly desired to have a sheet product which is capable of exhibiting good physical properties of tensile strength, flexibility and ductility to withstand the handling and processing without developing imperfections and cracks which would cause the sheet product to be unsuitable as a battery separator. Meeting this criteria is contrary to some of the above described properties (i.e. thin and light weight material and high porosity to provide good conductivity).

The present invention is particularly directed to an improved separator membrane which is useful in a sealed, recombinant electrochemical cell. Conventional electrochemical cells contain excess electrolyte i.e. the cells are flooded with electrolyte and, for example, in lead-acid batteries the cells are vented to permit gaseous by-products to escape. In more recently developed electrochemical cells commonly referred to as sealed or valve regulated recombinant design, the electrolyte is contained almost entirely within the separator which must be in intimate contact with the electrode, occupy the entire space between electrodes and in which there is no free unabsorbed electrolyte in the battery, at least in its fully charged condition. The separator of a recombinant battery must also be capable of permitting transportation of oxygen gas generated during charging or overcharging from the positive electrode side to the negative electrode side where it can be reconverted into water. For example, in lead-acid batteries, the oxygen gas must pass through the separator to the surface of the negative lead electrode which is damp with sulfuric acid. There the oxygen recombines with the lead to form lead oxide which converts to lead sulfate with the co-production of water. Thus, the cell can be sealed as no gas needs to be vented and no water needs to be externally provided. The recombinant battery is a maintenance free battery which can be used in any position without the fear of electrolyte loss and, therefor, is highly desired in applications such as lanterns, aircraft, and as emergency power source.

In addition to the above requirements, separators of a recombinant battery must be capable of holding the electrolyte within the separator pore structure and have sufficient wicking or capillary capability to hold the electrolyte over substantially the entire height of the separator. When the battery is an industrial emergency battery of substantial capacity and height, the wicking ability must be substantially equal to the height of the battery design.

It is clear from the above that separator design is complex and must take into account properties which are thought to be conflicting. For example, separators of low electrical resistance suggest large pore structure while dendrite inhibition calls for very small pore size; separators having high electrolyte holding capacity indicates very high porosity while strength suggests lower porosity; and separators having the ability to permit free passage of oxygen gas must, at the same time, have the ability to hold electrolyte to relatively large heights.

Therefore, separators for recombinant storage batteries are needed which are capable of absorbing very high amounts of electrolyte while having high electrolyte retention, and which have many micropores of a small diameter. Furthermore, it is important that the separator be of high mechanical strength so as to be easy to handle and manipulate during the course of formation and assembly of the storage battery. Finally, the separator must be capable of being formed in an inexpensive and large production manner and from relatively inexpensive materials.

The object of the present invention is to provide a separator product useful in recombinant batteries which have the capability of absorbing high amounts of electrolyte and the ability to have wicking capacity to be able to be used in said batteries of large dimensions. Another object of the present invention is to provide a separator product having low electrical resistance, providing ease of gaseous passage to permit reformation of water from the gaseous by-products and having small pore size to inhibit dendrite formation. Finally, an object of the present invention is to provide a separator product which has high wet strength (to be able to withstand forces encountered during battery operation) and high dry strength (to be able to withstand handling and machine forces encountered in battery formation) and which can be readily and economically formed.

## Summary of the Invention

The present invention provides an improved battery separator and a recombinant battery having said separator therein, wherein the separator is a substantially uniform sheet formed of randomly dispersed fibers composed of inorganic fibers having large diameter and length to diameter ratio and organic fibers having small diameter and length to diameter ratio, inert particulate material interdispersed within said fibers and composed of ultra-small particle size/large surface area particulate and relatively large particle size particulate, and a binding agent, as fully described herein below.

## Detailed Description

The instant invention is directed to separators suitable for use in sealed recombinant batteries and to the resultant improved battery.

The separator of the present invention is formed from a combination of components. It has been unexpectedly found that separators formed, as described herein, exhibit the desired properties, discussed herein above, as needed for a recombinant battery. The components include, inorganic fibers, organic fibers, small particle size particulate, large particle size particulate and binder.

One of the components required to form the subject separator is an inorganic fibrous material as, for example, glass fibers, having a large diameter for such fibers and having a high or large fiber length to diameter ratio. The inorganic fiber should have a mean fiber diameter of from about 0.5 micron to 10 microns and preferably from 1.5 microns to 5 microns. The term "large" as used herein and in the appended claims refers to the dimensions of the subject inorganic fibers relative to conventionally known fiber dimensions of inorganic fiber technology. The length of the inorganic fiber should be from about 1,000 to 30,000 microns, preferably from about 1,500 to 15,000 microns long. The length to diameter ratio can be of from about 200:1 to 40,000:1. The preferred inorganic fiber is glass fiber with a diameter of from about 1.5 to 3 microns and length of from 2,000 to 3,000 microns.

The separator of the present invention also must contain organic fibrous material. The organic material is a polymeric fiber formed of polyesters formed from polybasic organic acids with polyhydric alcohols, such as polyethylene terephthalate and the like; polyolefins, such as polyethylene, polypropylene, and the like; polynitriles such as polyacrylonitrile and the like; and polycarbonates, such as polyarylether carbonates as, for example, that formed by the condensation of Bisphenol-A with phosgene and the like. The preferred organic polymer fiberous materials for use in the present invention are polyesters such as those formed from polyethylene terephthalate and polyolefins formed from polyethylene or polypropylene. The most preferred organic fibers being polyester fibers.

The organic (polymeric) fiber component should be very small diameter, and short fiber dimensions relative to available organic fibrous materials. The fiber can be either non-fibrillated or fibrillated (preferred). It is generally viewed that fibers formed from organic material can be formed having diameters as small as about 5 microns. The fibers used in the present invention should be very small diameter organic fibers, that is have a diameter of from about 5 to 20 microns with from about 5 to 15 microns being preferred. The most preferred organic fibers have diameters of from about 7 to 14 microns. The length of the organic fibers should be small or short, that is from about 0.5 to 10 millimeters, preferably from about 2 to 8 millimeters. The term "short" or "small" as used herein and in the appended claims refers to organic fiber dimensions relative to conventional organic fibers known in the technology. The preferred organic fiber in the form of short polyester fibers have a denier of from 0.5 to about 2 and preferably from about 1 to 1.2. These fibers are commercially available.

The fibrous materials required to be used in the improved separator of the instant invention have a bimodal dimensional configuration. The diameter of the inorganic and organic fibers are bimodal and the lengths of the fibers are also bimodal. It is believed that the bimodal dimensional properties of the fibrous components used herein may be a means of providing the improved properties of the present application.

Another preferred organic fiber for use in forming the subject separator are polyolefin fibers formed from polyethylene or polypropylene. The most preferred polyolefin fiber are synthetic pulp fibers formed from polyethylene. These fibers have very short lengths (similar to cellulosic wood pulp) and are described in U.S. Patents 3,743,272; 3,891,499, 3,902,957; 3,920,508; 3,987,139; 3,995,001; 3,997,648; and 4,007,247. The fibers can be formed from low pressure polyethylene having a viscosity average molecular weight of about 20,000 to 2,000,000. These fibers may contain a dispersing agent. The preferred polyolefin organic fibers are synthetic pulp organic fibers have a high degree of branching or fibrillation. These are commercially available materials.

It is believed that by using the mixture of organic and inorganic fibers of the types described herein above, in the present invention one can achieve a separator which exhibits superior mechanical strength, electrolyte absorption and, at the same time, have the ability to permit gaseous (oxygen) passage through the resultant separator.

The inert particulate should be of ultra-small particle size and have a large surface area. With respect to the use of the presently described separator as a component in a sealed, recombinant lead-acid battery, the preferred inert particulate are siliceous filler, preferably an amorphous silica, as described below.

The subject separator requires the use of ultra small particle size amorphous silica. The particle size should be from about 0.001 to about 0.05 microns and, preferably, from about 0.001 to 0.02 microns and most preferably from about 0.001 to 0.015 microns in diameter. The silica should also have a very large surface area of from about 50 to 950 $m^2$/gm and preferably 100 to 500 $m^2$/gm. The particulate may be porous but is normally spherical particles with a smooth surface which is substantially free of pores. Examples of preferred silica particles are those having an average particle size of about 0.005 microns, a particle size distribution of from about 0.001 to 0.015 microns and a surface area of about 300 $m^2$/gm or a particulate product having average particle size of 0.01 microns, a particle size distribution of from about 0.005 to 0.02 micron and a surface area of about 200 $m^2$/gm. These are commercially available fumed silica products sold under trademarks of Aerosil and Sylosil.

In a preferred embodiment, the particulate component should be made up of a bimodal mixture of siliceous particulate. The second silica particulate should have a particle size of from 2 to 50 microns preferably from about 2 to 20 microns;-that is, the second particulate should be substantially larger in particle size than that of the first ultra-small particulate described above. Again, as described above, the second particulate should have a substantially narrow particle size distribution and may or may not have substantial porosity. This second particulate can be commercially obtained as precipitated silica under trademark of Sylox or Syloid.

The particulate material described above should be substantially uniformly distributed throughout the separator sheet product (both in terms of thickness as well as length and breadth). Although ultrafine first silica particulate, as described herein above, can be used as the sole particulate, the use of the larger second silica can not be used alone to provide the improved separator of the instant invention. In the preferred embodiment, where both are used in combination, the second silica particulate should not make up more than about 75 wt. percent of the total particulate used. The bimodal configuration preferably has from 30 to 60 and most preferably about 40 to 60 wt. percent of the second silica.

It has been found that by utilizing the bimodal configuration of particulate silica, the resultant separator unexpectedly provides superior wicking ability. The sole use of large particulate silica provides, on the otherhand, a mechanically weak and poor wicking separator.

The subject separator may utilize a binding agent capable of aiding to form the above-described components into a sheet product. The binding agents found suitable are polymeric materials such as polystyrene or polyacrylates (preferably a polymethacrylate) which are mixed with the other components in the form of a latex. The binder can be a phenolic resin such as phenol-formaldehyde resin which is applied to the initially formed web, as described below. Another binder suitable herein is a bicomponent fiber. Such fiber may be either of a side-by-side configuration where one side or ribbon of the fiber is composed of a high Tg polymer and the second side or ribbon is a low Tg polymer. Fibers of this nature are commercially available formed from polyethylene/polypropylene ribbons. The bicomponent fiber can also have the configuration of an inner core high Tg polymer (e.g. polypropylene) and a sheath surrounding the core composed of a low Tg polymer (e.g. polyethylene). These fibers will integrate with the other components to form the initial web and will be activated by having the web pass over heated rollers or the like.

In addition to the above, the subject separator may contain effective amounts of colorants, retention aids (e.g. cationic or anionic modified polyacrylamines or the like), surfactants (e.g. aryl nonionic surfactants such as alkylaryl polyethylene glycol and the like), processing aids and the like.

The present separator can be readily formed using conventional paper making processes. Suitable equipment include rotoformer paper making machines and Fourdrinier machines. The required fibrous materials (organic and inorganic), silicious particulate and the binding agent (except if phenolic) are mixed with water to prepare a substantially uniform slurry which can be metered out of the paper making machine's headbox onto the web forming rotoformer drum or wire screen. The web is calendered and then fed to heated drums where it is dried and the binding agent, as described above, is activated.

The resultant sheet is in the form of a substantially uniform product composed of inorganic fibers and organic fibers entangled in a nonwoven manner with silicious filler particulate dispersed throughout.

The above described components should be combined to provide a battery separator sheet product which contains (all parts, ratios and percentages are by weight unless specifically stated otherwise) inorganic fibers in from about 10 to 70 percent (preferably from about 40 to 60 percent). The organic fibers are present in from about 10 to 60 percent (preferably from about 10 to 30 percent). The total fiberous components of the resultant sheet product should be from 30 to 80 percent (preferably 60 to 80 percent) with the ratio of inorganic or organic fibers being preferably from about 1.5 to 3.5. The siliceous particulate material should be present in the sheet product in from about 10 to 60 percent (preferably from about 15 to 45 percent). As described above, the siliceous particulate component can be composed of ultra small siliceous particulate in from about 25 percent to 100 percent of this component with the larger siliceous particulate making up the remaining 0 to 75 percent (preferred amounts being: ultra small in 40 to 70 percent and most preferably 40 to 60 percent with the remainder being larger particulate siliceous particulate). Finally, the binding agent, when present, can be used in from 1 to about 15 percent of the separator, preferably from 3 - 12 percent. When the binder component is composed of bicomponent fiber, as described above, the fiber component can be used in amounts which take into account that this binder also provides a fiberous component to the resultant product. Other additives, such as colorants, surfactants processing aids and the like should not make up more than about 2 percent, preferably not more than 1 percent.

It has been unexpectedly found that by utilizing the components (and in the amounts) described herein above, the resultant sheet product exhibits an interaction between the components which provides a separator, capable of exhibiting a combination of properties generally thought counter to each other. The subject separator is capable of exhibiting very low electrical resistance (less than 0.3 ohm-cm) when a component of a battery while providing a high degree of inhibition to dendritic growth. The separators are capable of exhibiting a high absorbency (of greater than 90%, most often greater than 95%) and stability to electrolyte solution (aqueous sulfuric acid) while exhibiting a very high wicking capacity (e.g. heights of 20 cm and even 30 cm) with the separator void space being substantially filled with liquid enables them to be useful in forming large industrial type recombinant batteries. The resultant separator further exhibits high capacity of up to about 0.03 to 0.06 darcy at 90% saturation and of up to about 0.08 to 0.12 darcy at 80% saturation for gas passage, determined by oxygen permeability measurements described below. In addition, the separators of the present invention have high tensile strength of up to about 75 N/cm$^2$ and even higher (at rate of 2 inch/min). Finally, the separators of the present invention have been found to have a high degree of resiliency and crush resistance. They are, thus, capable of providing a high degree of continuous contact with the electrode plates during battery operation.

It is believed, though not meant to be a limitation on the instant invention, that the use of biomodal components (i.e. small and large dimension components) of both fibrous components and particulate components provides the enhanced separator of the present invention.

The following examples are given for illustrative purposes only and are not meant to be a limitation on the subject application and the appended claims. All parts and percentages are by weight unless otherwise stated.

Example 1

A fibrous sheet plate separator material was produced from 50% glass fiber, 20% polyester fiber, 10% fumed silica, 10% precipitated silica, and 10% latex polystyrene. The total charge to the paper machine was 100 lbs. The glass fiber was a commercially available product (WRX of Manville Corp.) having a mean fiber diameter of 2.5 m and a surface area of 0.6 $m^2$/g. The polyester (polyethylene phthalate fiber was of 1.1 denier (8 micron diameter) and had a length of 5 mm. The fumed silica (Aerosil 200 from DeGussa AG) had a mean particle diameter of 10 nm and a maximum particle diameter of 40 nm, and a surface area of about 200 $m^2$/g. The precipitated silica (Sylox 2 from W.R. Grace and Co.) had a mean particle diameter of 2-5 microns. The polystyrene latex (Lytron 5200 from Morton Thiokol Inc.) had a total solids content of 48% and a mean particle diameter of 0.2 microns.

The glass fiber was added to the pulper with approximately 1000 lbs. of water and 3 lbs of alum. The pH was adjusted to 3.5 with 98% sulfuric acid. This mixture was pulped for about 180 sec. and then transferred to the chest. The fumed silica, polyester fiber and polystyrene latex were then added to the chest along with an additional 800 lbs. of water. The contents of the chest were pumped to the dilution box where they were diluted further with water to a solid content of about 0.05% The transfer rate of the mix from the chest was metered to obtain the desired separator thickness. A 0.001% solution of a cationic acrylamide copolymer (RETEN 210, Hercules, Inc.) was added to the stuff box at the rate of 530 cc/min. and a 0.00055% aq. solution of an anionic acrylamide copolymer (RETEN 521, Hercules Inc.) were added to the mix box at the same rate as processing aids.

The mixture was transferred to the headbox from which the web was formed on a rotoformer. The web was then transferred, via an open metal mesh, through a drying furnace which was maintained at a temperature of 420°F. The web was then passed over seven steam heated cans for further drying and wound on to a roller and later cut to the desired length and width.

Example 2

The procedure of Example 1 was followed except the nominal composition of the separator was 50 w/w WRX glass fiber, 12 w/w 1.1 denier polyester fiber, 33 w/w Aerosil 200 fumed silica, 5 w/w Lytron 5200 polystyrene latex. The total charge to the paper machine was 90 lbs.

Example 3

The procedure of Example 1 was followed except that the nominal composition of the separator was 12% glass fiber, 34% 0.5 denier polyester fiber (Chori America Inc.), and 54% Aerosil 200 fumed silica. The glass fiber slurry was pulped for about 15 minutes. The total charge to the paper machine was 59 lbs.

Example 4

The procedure of Example 1 was followed except that the nominal composition was 50 w/w WRX glass fiber, 25 w/w 1.1 denier polyester fiber, 10 w/w Aerosil 200 fumed silica, 10% Syloid 244 precipitated silica, and 5 w/w Lytron 5200 polystyrene latex.

Example 5

The procedure of Example 3 was followed except that the nominal composition was 50% WRX glass fiber, 5% 1.1 denier polyester fiber, 17.5% Aerosil 200 fumed silica, 17.5% Syloid 244 precipitated silica, and 5% Lytron 5200 polystyrene latex. The total charge to the paper machine was 50 lbs.

The separator properties shown in Table 1 were measured using the following methods. Separator thickness was measured according to TAPPI 494 at 0.7 psi. Porosity was measured as follows: The weight of the separator was measured while dry in air, with the pores filled with water while in air, and while immersed in water. The porosity is then calculated from the equation: Porosity = 100 x (wet weight in air - dry weight)/(wet weight in air - wet weight in water). The incremental electrical resistance caused by the separator (ER) was measured according to the method described by Lander and Weaver (Characteristics of Separators for Alkaline Silver Oxide Zinc Secondary Batteries, J.E. Cooper and A. Fleishcer Ed.). The tensile strength and elongation were measured on an Instron 4201. The width of the separator sample was one inch. The pull rate was 2 inches/minute and the distance between the jaws that held the sample was 2 inches. The wicking rate was determined by clamping a 1 inch wide by 8 inch long sample between two acrylic sheets with about 1/2 inch of the separator exposed. The separator/acrylic sheet assembly was then clamped in a vertical position and the exposed portion of the separator was immersed in 35 w/w sulfuric acid. The height of the acid in the separator was recorded. A dye (such as methyl orange) was used to help distinguish the height of the electrolyte. Gas or oxygen permeability measurements were made by determining the gas flow rate through the separator with a void volume having a certain percentage filled with water.

| Ex | Glass Fiber % | Polymer Fiber % | SiO2 sm/1g % | Styrene Latex % | Thickness (mil) | Porosity (%) | Max Pore Size um | ER ohm-cm | Wicking Height @ 10 min. (cm) | Tensile Strength N/cm² |
|---|---|---|---|---|---|---|---|---|---|---|
| 1 | 50 | 20 | 10/10 | 10 | 50 | 90 | 38 | 23 | 17 | 72 |
| 2 | 50 | 12 | 33/0 | 5 | 62 | 92 | 36 | 20 | 16 | 50 |
| 3 | 12 | 34 | 54/0 | - | 55 | 86 | 34 | 25 | 16 | 32 |
| 4 | 50 | 25 | 10/10 | 5 | 43 | 92 | 43 | 21 | 16 | 19 |
| 5 | 50 | 5 | 17.5/17.5 | 5 | 29 | 89 | 29 | 25 | 13 | 30 |

## Claims

1. A separator characterised by comprising a substantially uniform sheet composed of randomly dispersed fibers of inorganic fibers having large diameter and length to diameter ratio and of organic fibers having small diameter and length to diameter ratio, siliceous particulate having an average particle size of from substantially 0.001 to substantially 0.05 microns interdispersed within said fibers and an agent capable of binding the sheet components together.

2. The separator of Claim 1 characterised in that the sheet is composed of:- 10 to 70 percent by weight inorganic fibers; 10 to 60 percent by weight organic fibers with a wt. ratio of inorganic to organic fibers of from substantially 1.5 to substantially 3.5; 10 to 60 percent by weight of siliceous particulate; and substantially 1 to substantially 15 percent by weight of binder agent.

3. The separator of Claim 1 or 2 characterised in that the sheet has further interdispersed therein a second siliceous particulate having an average particle size of from 2 to 50 microns, the second siliceous particulate being up to substantially 75 percent by weight of the total siliceous particulate contained in the said sheet.

4. The separator of any one of Claims 1 to 3 characterised in that the inorganic fibers have a fiber diameter of from substantially 0.5 to substantially 10 microns and a length to diameter of from substantially 200:1 to substantially 40,000:1.

5. The separator of any one of Claims 1 to 4 characterised in that the organic fibers have a fiber diameter of from substantially 5 to substantially 20 microns and a length of from substantially 0.5 to substantially 10 millimeters.

6. The separator of any one of Claims 1 to 5 characterised in that the inorganic fiber is glass fiber and the organic fiber is a polyester or polyolefin fiber.

7. A recombinant storage battery having at least one pair of electrodes of opposite polarity, electrolyte composition and a separator sheet positioned between and in substantial contact with adjacent electrodes of opposite polarity, characterised in that the separator is a sheet of any one of Claims 1 to 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US - A - 4 908 282 (BADGER) * Abstract; example 1 * -- | 1,2,6, 7 | H 01 M 2/16 H 01 M 10/52 |
| A | US - A - 4 529 677 (BODENDORF) * Claims 1,10 * -- | 1,2,6, 7 | |
| A | US - A - 4 216 281 (O'RELL et al.) * Claim 1 * -- | 1,2,6 | |
| A | DE - A1 - 2 509 823 (HONSHU SEISHI) * Claims 1,6 * -- | 1,2,6 | |
| A | GB - A - 2 117 172 (TEXON) * Claims 1,20 * ---- | 1,2,6, 7 | |
| | | | TECHNICAL FIELDS SEARCHED (Int. Cl.5) H 01 M |

The present search report has been drawn up for all claims

| Place of search | Date of completion of the search | Examiner |
|---|---|---|
| VIENNA | 30-09-1991 | LUX |